# EUROPÄISCHE PATENTANMELDUNG

(11) **EP 2 675 059 A1**
(43) Veröffentlichungstag der Anmeldung: **18.12.2013**
(21) Anmeldenummer: 12172278.9
(22) Anmeldetag: 15.06.2012
(51) Int. Cl.: H02P 25/16, H02K 11/00

(54) **Antriebssystem**

(71) Anmelder: SICK STEGMANN GmbH, 78166 Donaueschingen (DE)
(72) Erfinder: Basler, Stefan, 78086 Brigachtal (DE)
(74) Vertreter: Patentanwälte Westphal, Mussgnug & Partner

(57) **Zusammenfassung**

Die Erfindung betrifft ein Antriebssystem (10) mit einem Elektromotor (20) mit einem encoderlosen Regler (30), wobei der Elektromotor (20) eine Schnittstelle zur digitalen Datenübertragung aufweist.

## Beschreibung

Die Erfindung betrifft ein Antriebssystem gemäß dem Oberbegriff des Patentanspruchs 1.

Bekannt sind seit langem encoderlose Regelungen, deren Ziel es ist, einen Elektromotor geregelt zu betreiben, ohne einen hochauflösenden Drehgeber einsetzen zu müssen, der die mechanische Rotorlage anzeigt. Da die Kenntnis der Rotorlage jedoch notwendig für einen geregelten Betrieb ist, wird bei encoderlosen Regelungen die Bestimmung der Rotorlage durch eine Strom- und/oder Spannungsmessung und eine entsprechende Algorithmik realisiert. Die encoderlose Regelung hat gegenüber der Regelung mit einem Drehgeber verschiedene Vorteile. Insbesondere sind encoderlose Systeme in der Regel kostengünstiger, da der hochauflösende Drehgeber und eine entsprechende Verkabelung entfallen, und weisen eine höhere Zuverlässigkeit sowie eine höhere Robustheit auf. Nachteilig bei Systemen mit einer encoderlosen Regelung ist jedoch, dass die encoderlosen Regelungen nicht absolut auf eine Umdrehung sind, oft von Motorparametern, welche gegebenenfalls temperaturabhängig sind, abhängig sind, keine Multiturn-Erweiterung erlauben und für Sicherheitsanwendungen nicht geeignet erscheinen.

Die Aufgabe der Erfindung besteht darin, ein encoderloses Antriebssystem weiterzuentwickeln, insbesondere derart, dass auf kostengünstige Art und Weise zusätzliche Informationen bereitgestellt werden können.

Die Aufgabe wird erfindungsgemäß gelöst durch ein Antriebssystem mit den Merkmalen des Patentanspruchs 1.

Vorteilhafte Ausgestaltungen und Weiterbildungen der Erfindung sind in den abhängigen Ansprüchen angegeben.

Das erfindungsgemäße Antriebssystem mit dem Elektromotor mit einem encoderlosen Regler zeichnet sich dadurch aus, dass der Elektromotor eine Schnittstelle zur digitalen Datenübertragung aufweist. Bei bekannten Antriebssystemen mit einem Elektromotor mit einem encoderlosen Regler werden lediglich analoge Ströme und Spannungen zur Messung der Rotorlage zwischen dem Regler und dem Elektromotor übertragen und über das Anschlusskabel die Strom- oder Spannungsversorgung gewährleistet. Erfindungsgemäß ist nun eine Möglichkeit zur digitalen Datenübertragung vorgesehen, über welche zusätzliche Informationen auf kostengünstige Art und Weise bereitgestellt werden können. Die sensorlose Regelung hat weiterhin ihre Aufgabe als Rotorlage- und Geschwindigkeitserfassungssystem. Das Antriebssystem, bei welchem der Elektromotor zusätzlich eine Schnittstelle zur digitalen Datenübertragung aufweist, kann zusätzliche technische Eigenschaften ermöglichen, ohne dass die Kosten eines Elektromotors mit hochauflösendem Drehgeber entstehen würden.

Vorzugsweise ist die Schnittstelle als bidirektionale Schnittstelle ausgebildet. Gemäß einer bevorzugten Ausführungsform ist die Schnittstelle als serielle Schnittstelle ausgebildet.

Gemäß einer besonders bevorzugten Ausführungsform ist die Schnittstelle als Schnittstelle für Motor-Feedback-Systeme ausgebildet. Dadurch können über die Schnittstelle zusätzliche Informationen, wie sie beim Einsatz von Motor-Feedback-Systemen, d. h. bei Motoren mit hochauflösendem Drehgeber, üblich sind, zur Verfügung gestellt werden, ohne die Kosten eines Motor-Feedback-Systems zu erfordern.

Gemäß einer besonders bevorzugten Ausführungsform der Erfindung weist der Elektromotor einen Speicher auf, welcher mittels der Schnittstelle beschreibbar und auslesbar ist. In dem Speicher können beispielsweise Motorparameter oder sonstige für den Betrieb des Elektromotors hilfreiche Daten gespeichert werden.

Vorzugsweise weist der Elektromotor eine Elektronikschaltung auf. Diese ermöglicht insbesondere auch die Verarbeitung von Zusatzinformationen, die beispielsweise über zusätzliche Sensoren ermittelt werden können.

Gemäß einer bevorzugten Ausführungsform weist der Elektromotor einen Sensor zur Bestimmung einer physikalischen Größe, beispielsweise einen Temperatursensor, einen Drehmomentsensor, einen Beschleunigungssensor und/oder einen Vibratiosnsensor auf. Auf diese Weise können vielfältige Informationen über den Zustand des Elektromotors gewonnen werden. Beispielsweise weise ein Temperatursensor den Vorteil auf, dass die vom Temperatursensor ermittelten Daten über die Schnittstelle an den Regler ausgegeben werden können und gegebenenfalls die Regelung des Motors an die entsprechende Temperatur angepasst werden kann, beispielsweise dadurch, dass temperaturabhängige Motorparameter, die zum Teil für die Algorithmen der encoderlosen Regelung relevant sind, bei Temperaturänderungen nachgeführt werden können. Beispielsweise weist ein Drehmomentsensor den Vorteil auf, gegebenenfalls eine Überlastung des Motors feststellen zu können.

Gemäß einer bevorzugten Ausführungsform der Erfindung weist der Elektromotor eine Motorwelle auf, an welcher Mittel zur groben Bestimmung der Absolutposition angeordnet sind, wobei vorzugsweise die Mittel die Position basierend auf optischen, kapazitiven, induktiven oder magnetischen Prinzipien bestimmen. Unter einer groben Bestimmung der Absolutposition ist dabei die Bestimmung der Position auf eine Umdrehung genau zu verstehen, um die Einschränkung der sensorlosen Regelung, wonach nur auf elektrische Perioden aufgelöst werden kann zu umgehen. Beispielsweise können die Mittel als Magnet ausgebildet sein, dessen Position mittels eines Hallsensors bestimmbar ist. Durch die Mittel zur groben Bestimmung der Absolutposition kann mit einfachen und kostengünstigen Mitteln eine Indikation der Rotorlage relativ zu den Motorpolen zur Ableitung einer Absolutlageinformationen erfolgen. Selbstverständlich ist es möglich, dass die Mittel zur groben Bestimmung der Absolutposition auch eine genauere Absolutposition bestimmen können.

Vorzugsweise weist der Elektromotor Mittel zur Bestimmung von Multiturn-Information auf, um mehrere Umdrehungen der Welle des Elektromotors auflösen zu können.

Gemäß einer vorteilhaften Weiterbildung der Erfindung sind von der Elektronikschaltung und/oder Sensoren zur Bestimmung physikalischer Größen und/oder den Mitteln zur groben Bestimmung der Absolutposition und/oder den Mitteln zur Bestimmung von Multiturn-Information ermittelte Daten in den Speicher schreibbar und aus dem Speicher auslesbar. Dadurch ist beispielsweise eine Art elektronisches Tagebuch des Elektromotors führbar. Die in dem Speicher abgelegten Daten können insbesondere der Steuerung des Elektromotors zur Verarbeitung zur Verfügung stehen.

Die Erfindung wird anhand der Figur ausführlich erläutert. Es zeigt:

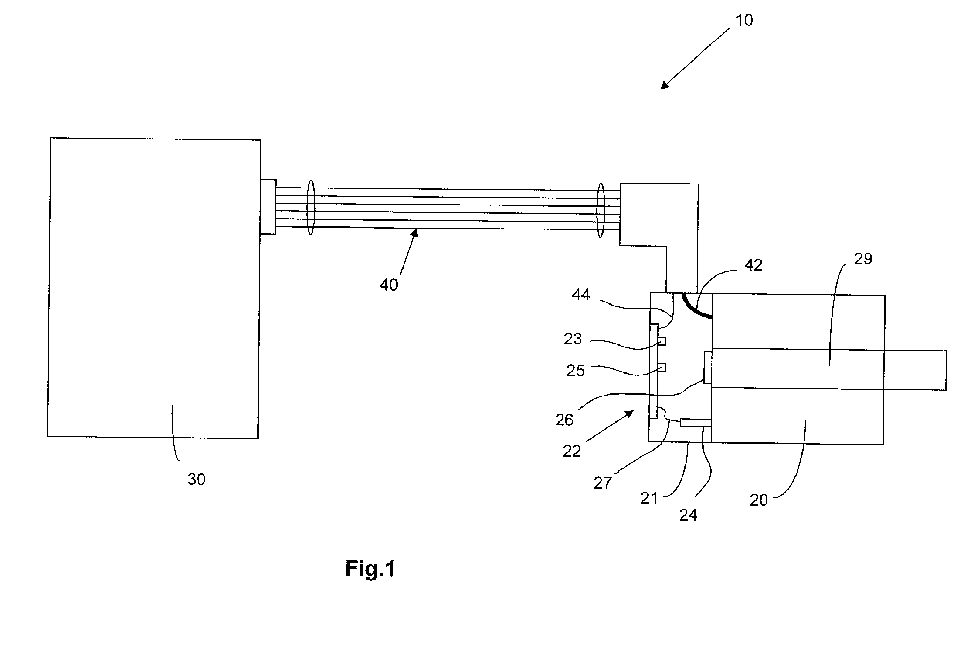

- Figur 1: eine schematische Darstellung eines Antriebssystems gemäß einem Ausführungsbeispiel der Erfindung.

Figur 1 zeigt schematisch ein Antriebssystem 10 mit einem Elektromotor 20 in einem Gehäuse 21, welcher mit einem Regler 30 über ein Motorkabel 40 verbunden ist. Das Antriebsystem 10 stellt dabei ein encoderloses Antriebssystem 10 dar. Dieses weist somit keinen hochauflösenden Drehgeber zur Bestimmung der absoluten Rotorlage des Elektromotors 20 auf, sondern bestimmt die Rotorlage durch Strom- und/oder Spannungsmessungen und entsprechende Auswertealgorithmen.

Das Motorkabel 40 weist einerseits ein Leistungskabel 42 mit mehreren Litzen zur Strom- und Spannungsversorgung des Elektromotors 20 und andererseits ein Datenkabel 44 auf, welches beispielsweise zwei Litzen aufweisen kann. Auch können das Leistungskabel 42 und das Datenkabel 44 in einem Kabelstrang integriert sein.

In dem Gehäuse 21 des Elektromotors 20 ist eine Schnittstelle zur digitalen Datenübertragung angeordnet, mittels welcher Daten von dem Elektromotor 20 zum Regler 30 digital übertragen werden können. Die Schnittstelle ist insbesondere als bidirektionale, serielle Schnittstelle ausgebildet und besonders bevorzugt als Schnittstelle für Motor-Feedback-Systeme realisiert. Über die Schnittstelle, insbesondere über das Datenkabel 44 des Motorkabels 40, können zusätzliche Informationen zwischen dem Elektromotor 20 und dem Regler 30 übertragen werden. In dem Gehäuse 21 des Elektromotors 20 ist beispielsweise ein Elektronikmodul 22 angeordnet, in welches die Schnittstelle integriert sein kann. Das Elektronikmodul kann in einer Ausführungsform einen Speicher 23 aufweisen, welcher über die Schnittstelle beschreibbar und auslesbar ist und in welchem Motorparameter oder zusätzliche Informationen, die zum Betrieb des Elektromotors 20 hilfreich sind, gespeichert und abrufbar hinterlegt sind.

In einer weiteren Ausführungsform kann in das Elektronikmodul 22 ein Temperatursensor 24 integriert sein, welcher die Temperatur des Elektromotors 20 bestimmt und über das Motorkabel 40 an den Regler 30 überträgt, um gegebenenfalls die encoderlose Regelung des Reglers 30 an die Temperatur des Elektromotors 20 anpassen zu können. Zur genaueren Bestimmung der Temperatur des Elektromotors ist der Temperatursensor 24 in einer alternativen Ausführungsform wie in Figur 1 dargestellt direkt an dem Elektromotor 20 angeordnet und mit dem Elektronikmodul 22 über ein Kabel 27 verbunden.

In einer weiteren Ausführungsform kann in dem Gehäuse 21 an einer Motorwelle 29 des Elektromotors 20 ein Magnet 26 angeordnet sein, dessen Position sich bei Drehung der Motorwelle 29 in Abhängigkeit vom Drehwinkel ändert und dessen Position mittels eines Hallsensors 25, der vorzugsweise auf dem Elektronikmodul 22 angeordnet ist, ausgelesen werden kann, um auf diese Weise die Rotorlage relativ zu den Motorpolen absolut aber mit geringer Auflösung bestimmen zu können, ohne einen hochauflösenden Drehgeber vorsehen zu müssen.

Zusätzlich kann in einer nicht dargestellten Ausführungsform auch ein Drehmomentsensor oder weitere Sensoren zur Erfassung einer physikalischen Größe in dem Gehäuse 21 des Elektromotors 20 angeordnet sein, dessen oder deren Messdaten in dem Elektronikmodul 22 erfasst und gegebenenfalls verarbeitet, aufbereitet und/oder digitalisiert, in dem Speicher 23 abgelegt und über die digitale Schnittstelle an den Regler 30 übertragen werden können.

Es ist insbesondere möglich, mit Hilfe des Speichers 23 eine Art elektronisches Tagebuch des Elektromotors 20 zu führen, wenn in den Speicher 23 die von dem Elektronikmodul 22, den unterschiedlichen Sensoren wie beispielsweise dem Temperatursensor 24 oder dem Drehmomentsensor und/oder dem Hallsensor 25 ermittelte Daten gespeichert werden, die auch der Steuerung des Elektromotors 20 zur Verarbeitung zur Verfügung stehen können.

### Bezugszeichenliste

- 10: Antriebssystem

- 20: Elektromotor
- 21: Gehäuse
- 22: Elektronikmodul
- 23: Speicher
- 24: Temperatursensor
- 25: Hallsensor
- 26: Magnet
- 27: Kabel
- 29: Motorwelle

- 30: Regler

- 40: Kabel
- 42: Leistungskabel
- 44: Datenkabel

## Patentansprüche

1. Antriebssystem (10) mit einem Elektromotor (20) mit einem encoderlosen Regler (30),
**dadurch gekennzeichnet, dass** der Elektromotor (20) eine Schnittstelle zur digitalen Datenübertragung aufweist.

2. Antriebssystem nach Anspruch 1,
**dadurch gekennzeichnet, dass** die Schnittstelle als bidirektionale Schnittstelle ausgebildet ist.

3. Antriebssystem nach Anspruch 1 oder 2,
**dadurch gekennzeichnet, dass** die Schnittstelle als serielle Schnittstelle ausgebildet ist.

4. Antriebssystem nach einem der vorhergehenden Ansprüche,
**dadurch gekennzeichnet, dass** die Schnittstelle als Schnittstelle für Motor-Feedback-Systeme ausgebildet ist.

5. Antriebssystem nach einem der vorhergehenden Ansprüche,
**dadurch gekennzeichnet, dass** der Elektromotor (20) einen Speicher (23) aufweist, welcher mittels der Schnittstelle beschreibbar und auslesbar ist.

6. Antriebssystem nach einem der vorhergehenden Ansprüche,
**dadurch gekennzeichnet, dass** der Elektromotor (20) eine Elektronikschaltung (22) aufweist.

7. Antriebssystem nach einem der vorhergehenden Ansprüche,
**dadurch gekennzeichnet, dass** der Elektromotor (20) einen Sensor zur Bestimmung einer physikalischen Größe, beispielsweise einen Temperatursensor (24), einen Drehmomentsensor, einen Beschleunigungssensor und/oder einen Vibrationssensor, aufweist.

8. Antriebssystem nach einem der vorhergehenden Ansprüche, **dadurch gekennzeichnet, dass** der Elektromotor (20) eine Motorwelle (29) aufweist, an welcher Mittel zur groben Bestimmung der Absolutposition angeordnet sind, wobei vorzugsweise die Mittel die Position basierend auf optischen, kapazitiven, induktiven oder magnetischen Prinzipien bestimmen.

9. Antriebssystem nach einem der vorhergehenden Ansprüche, **dadurch gekennzeichnet, dass** der Elektromotor (20) Mittel zur Bestimmung von Multiturn-Information aufweist.

10. Antriebssystem nach Anspruch 5 und einem der Ansprüche 6
bis 9,
**dadurch gekennzeichnet, dass** von der Elektronikschaltung (22) und/oder dem Sensor und/oder den Mitteln zur groben Bestimmung der Absolutposition und/oder den Mitteln zur Bestimmung von Multiturn-Information ermittelte Daten in den Speicher (23) schreibbar und aus dem Speicher (23) auslesbar sind.

## Geänderte Patentansprüche

### Geänderte Patentansprüche gemäss Regel 137(2) EPÜ.

**1.** Antriebssystem (10) mit einem Elektromotor (20) mit einem encoderlosen Regler (30),
**dadurch gekennzeichnet, dass** der Elektromotor (20) eine Schnittstelle zur digitalen Daten-übertragung von dem Elektromotor (20) zum Regler (30) aufweist.
